# EUROPÄISCHE PATENTSCHRIFT

(11) **EP 2 539 756 B1**
(45) Veröffentlichungstag und Bekanntmachung des Hinweises auf die Patenterteilung: **04.01.2017**
(21) Anmeldenummer: 10776086.0
(22) Anmeldetag: 02.11.2010
(51) Int. Cl.: G02B 6/44, H02G 15/10, H04Q 1/14

(54) **HALTERUNG FÜR MINDESTENS EINE KASSETTE**
SUPPORT FOR AT LEAST ONE CASSETTE
SUPPORT POUR AU MOINS UNE CASSETTE

(30) Priorität: 01.02.2010 DE 102010006611
(43) Veröffentlichungstag der Anmeldung: 02.01.2013
(73) Patentinhaber: Tyco Electronics Services GmbH, 8200 Schaffhausen (CH)
(72) Erfinder: BENEDETTO, Adrian, 12103 Berlin (DE); HARTMANN, Oliver, 14473 Potsdam (DE); MÖSSNER, Frank, 12277 Berlin (DE); SIELAFF, Michael, 59597 Erwitte (DE); FISCHER, Thomas, 04519 Rachwitz / Zschortau (DE)
(74) Vertreter: Patentanwälte Bressel und Partner mbB
(86) Internationale Anmeldenummer: PCT/EP2010/006671
(87) Internationale Veröffentlichungsnummer: WO 2011/091823

(56) Entgegenhaltungen:
- WO-A1-00/65397
- WO-A1-99/47960
- US-A1- 2004 120 681
- US-B1- 6 275 641

## Beschreibung

Die Erfindung betrifft eine Halterung für mindestens eine Kassette zur strukturierten Ablage und Handhabung von Lichtwellenleitern bzw. von Lichtwellenleiter-Spleißverbindungen.

Vorrichtungen zur strukturierten Ablage bzw. Handhabung von Lichtwellenleitern bzw. von Lichtwellenleiter-Spleißverbindungen werden in Kabelnetzen, insbesondere in der Netzwerktechnik verwendet. Sie dienen insbesondere dem Schutz von Spleißverbindungen an Verbindungsstellen von zwei Lichtwellenleitern.

Weiter dienen sie z.B. zur Ablage, Abzweigung oder Aufteilung von Lichtwellenleitern aus Bündeladern, die mehrere Lichtwellenleiter umfassen. Mehrere Bündeladern können dabei als Bündeladerkabel zusammengefasst sein.

Bei der Ablage und Handhabung von Lichtwellenleitern, Bündeladern und/oder Bündeladerkabeln ist darauf zu achten, dass Übertragungseigenschaften der Lichtwellenleiter nicht negativ beeinträchtigt werden. Insbesondere ist die Einhaltung von Mindestbiegeradien zu beachten. Auch ist zu beachten, dass sich eine Lage von einmal abgelegten Lichtwellenleiter oder Bündeladern bei einer Handhabung, z.B. bei Arbeiten an den Lichtwellenleitern, möglichst wenig verändert. Hierdurch können ebenfalls Übertragungseigenschaften der Lichtwellenleiter erhalten bleiben.

Die DE 103 14 262 A1 offenbart zur strukturierten Ablage von Lichtwellenleitern eine Vorrichtung mit einem Rahmen und mit mehreren Spleiß-Kassetten, wobei an einer Vorderseite und an einer Rückseite des Rahmens jeweils mehrere Spleiß-Kassetten übereinander angeordnet und schwenkbar an dem Rahmen befestigt sind. An mindestens einer vertikal verlaufenden Schmalseite des Rahmens sind Faserführungselemente für Lichtwellenleiterfasern befestigt sind, derart, dass die Lichtwellenleiterfasern im Bereich der oder jeder Schmalseite seitlich neben den Spleiß-Kassetten und dem Rahmen geführt sind. Weiter offenbart die Druckschrift, dass Lichtwellenleiterfasern derart durch zylindrische Achskörper der Spleiß-Kassetten geführt sind, dass eine Einführungsrichtung der Lichtwellenleiterfasern in eine Spleiß-Kassette in etwa parallel zur einer Schwenkachse der jeweiligen Spleiß-Kassette verläuft, und dass der zylindrische Achskörper der jeweiligen Spleiß-Kassette axial geschlitzt ist, derart, dass die Lichtwellenleiterfasern in radialer Richtung durch eine Öffnung in den zylindrischen Achskörper einführbar sind.

Es stellt sich das technische Problem, eine Halterung für mindestens eine Kassette, die der strukturierten Ablage und einfachen Handhabung von Lichtwellenleitern und/oder Bündeladern dient, zu schaffen, die eine Lageänderung von einmal abgelegten Lichtwellenleiter oder Bündeladern bei einer Handhabung minimiert, wobei Übertragungseigenschaften der Lichtwellenleitern bei der Handhabung nicht negativ beeinflusst werden.

Die Lösung des technischen Problems ergibt sich aus den Merkmalen des Anspruchs 1. Weitere vorteilhafte Ausführungen der Erfindung ergeben sich aus den Unteransprüchen.

Vorgeschlagen wird eine Halterung für mindestens eine Kassette. Die Halterung umfasst mindestens eine Kassette. Die Kassette dient hierbei der strukturierten Ablage von Lichtwellenleitern, insbesondere von Glasfasern, Pigtails und Patchcords.

Nachfolgend bezeichnet eine Verbindung eine formschlüssige, kraftschlüssige oder stoffschlüssige Verbindung. Eine Verbindung kann hierbei lösbar oder unlösbar sein.

Eine Verbindung eines ersten Gegenstands mit einem zweiten Gegenstand ist hierbei in der Regel durch ein Befestigungselement oder Verbindungselement des ersten Gegenstands und ein zu diesem Befestigungselement oder Verbindungselement des ersten Gegenstands korrespondierendes Befestigungselement oder Verbindungselement des zweiten Gegenstands herstellbar. Mittels der Befestigungs- oder Verbindungselement ist hierbei die formschlüssige, kraftschlüssige oder stoffschlüssige Verbindung herstellbar.

Nachfolgend bezeichnen lösbare Verbindungen insbesondere Rastverbindung, jedoch auch Steckverbindungen, Schraubverbindungen und weitere lösbare Verbindung, die der Fachmann aus den ihm bekannten lösbaren Verbindungen geeignet auswählt.

Hinsichtlich einer Rastverbindung wird nachfolgend davon ausgegangen, dass in einer allgemeinen Form eine Rastverbindung zwischen einem Rastelement und einer korrespondierenden Rastaufnahme herstellbar ist. Das Rastelement und die korrespondierende Rastaufnahme sind also eine spezielle Ausführungen von Befestigungs- oder Verbindungselementen. Hierbei kann das Rastelement z.B. als Rastnase oder Rastzunge oder als federnde Rastzunge ausgebildet sein. Die Rastaufnahme kann hierbei z.B. ein Rastschlitz und/oder eine Rastöffnung und/oder eine Rastvertiefung und/oder Rastschenkel sein.

Die Kassette kann hierbei eine so genannte Term-Kassette sein. Eine Term-Kassette dient zur Aufnahme, Befestigung und Führung von Elementen und Lichtwellenleitern mittels derer einzelne Lichtwellenleiter von einer Außenseite her in definierter Weise, insbesondere mittels einer Steckverbindung, kontaktierbar sind. In eine Term-Kassette ist mindestens ein Kabel einführbar. Die Term-Kassette kann weiter eine Halterung für mindestens einen Adapter aufweisen. Auch kann die Term-Kassette die Halterung ausbilden, z.B. wenn die Term-Kassette als ein einteiliges Spritzgussteil gefertigt wird. Nachfolgend wird davon ausgegangen, dass der Begriff "aufweisen" auch den Begriff "ausbilden" umfasst.

Mittels des Adapters sind zwei gleichartige oder verschiedenartige Stecker verbindbar. Ein Stecker ist hierbei ein Endkontakt eines Lichtwellenleiters. Stecker können hierbei so genannte DIN-Stecker oder ST-Stecker oder E2000-Stecker oder LC-Stecker oder SC-Stecker oder Duplex-SC-Stecker oder MTRJ-Stecker oder FC-Stecker sein.

Die Halterung für den mindestens einen Adapter kann hierbei lösbar mit der Term-Kassette verbindbar sein. Hierbei kann die Term-Kassette ein Element zur Befestigung der Halterung aufweisen. Hierdurch ergibt sich in vorteilhafter Weise, dass eine Term-Kassette modular mit Halterungen für verschiedene Arten von Adaptern oder weiteren Elementen der Lichtwellenleitertechnik bestückbar ist.

Insbesondere dient die Term-Kassette zur Herstellung einer gewünschten Verbindung von Glasfasern mittels der oben erwähnten Stecker. Hierzu kann z.B. ein Kabel in die Term-Kassette eingeführt werden. Aus diesem Kabel werden dann z.B. mittels eines so genannten Fan-Out-Elements die Lichtwellenleiter des Kabels vereinzelt. Die vereinzelten Adern können dann mit einer gewünschten Steckerart konfektioniert werden. Weiter kann die Term-Kassette mit Adaptern bestückt sein. Die Adapter sind hierbei derart angeordnet, dass eine erste Adapterschnittstelle kassettenseitig und eine zweite Adapterschnittstelle von einer Außenseite der Term-Kassette zugänglich ist. Hierbei sind die mit gewünschten Steckern konfektionierten, vereinzelten Lichtwellenleiter in die erste, kassettenseitige Adapterschnittstelle einsteckbar. Zur Kontaktierung oder Verbindung eines gewünschten Lichtwellenleiters kann somit ein Stecker eines weiteren Lichtwellenleiters in die zu der ersten Adapterschnittstelle korrespondierende Adapterschnittstelle, die von der Außenseite der Term-Kassette zugänglich ist, eingesteckt werden. Eine Term-Kassette kann hierbei mindestens ein Element zur Befestigung eines Fan-Out-Elements aufweisen.

Weiter kann die Term-Kassette mindestens ein Element zur Führung von Lichtwellenleitern aufweisen. Mindestens ein Abschnitt des Elementes zur Führung kann hierbei kreisförmig ausgeführt sein, wobei ein Radius des Abschnitts mindestens ein Mindestbiegeradius der Lichtwellenleiter ist. Das Element zur Führung von Lichtwellenleitern kann hierbei auch zur räumlichen Trennung einzelner Lichtwellenleiter dienen. Das Element zur Führung kann hierbei als Führungsrippe ausgebildet sein. Hierdurch wird in vorteilhafter Weise gewährleistet, dass ein Mindestbiegeradius der Lichtwellenleiter eingehalten wird, wodurch Übertragungseigenschaften der Lichtwellenleiter nicht negativ beeinflusst werden.

Alternativ kann die Kassette eine Spleiß-Kassette sein. In eine Spleiß-Kassette sind hierbei Kabel, Adern oder eine oder mehrere Lichtwellenleiter einführbar. Wie die Term-Kassette kann die Spleiß-Kassette mindestens ein Element zur Führung von Lichtwellenleitern aufweisen. Mindestens ein Abschnitt des Elementes zur Führung kann hierbei kreisförmig ausgeführt sein, wobei ein Radius des Abschnitts mindestens ein Mindestbiegeradius der Lichtwellenleiter ist. Das Element zur Führung von Lichtwellenleitern kann hierbei auch zur räumlichen Trennung einzelner Lichtwellenleiter dienen. Das Element zur Führung kann hierbei als Führungsrippe oder als Führungskanal oder als über einem Boden der Spleiß-Kassette erhabener Führungskörper ausgebildet sein.

Insbesondere können ein oder mehrere Elemente zur Führung von Lichtwellenleitern als Ablage von Überlängen der Lichtwellenleiter dienen. Eine solche Ablage kann beispielsweise mehrere Führungskanäle und/oder Führungskörper und/oder Führungsrippen umfassen, wobei ein Verlauf der Führungsrippen und/oder ein Verlauf der Führungskanäle und/oder eine Kontur der Führungskörper ein oder mehrere zumindest teilweise kreisförmige oder ovale Führungen definieren, wobei ein Radius einer kreisförmigen oder ovalen Führung mindestens einem Mindestbiegeradius der Lichtwellenleiter entspricht.

Hierbei können die Führungskanäle und/oder Führungskörper und/oder Führungsrippen derart zueinander angeordnet sein, dass mehrere kreisförmige Führungen an definierten Bereichen tangential ineinander übergehen. In diesen Bereichen ist dann eine Krümmungsradiusänderung für die Lichtwellenleiterfasern realisierbar. Hierdurch wird in vorteilhafter Weise gewährleistet, dass ein Mindestbiegeradius der Lichtwellenleiter eingehalten wird, wodurch Übertragungseigenschaften der Lichtwellenleiter nicht negativ beeinflusst werden.

Weiter kann die Spleiß-Kassette mindestens einen Spleiß-Halter zur Befestigung und definierten Ablage einer Spleiß-Verbindung in der Spleiß-Kassette aufweisen.

Alternativ kann die Kassette eine so genannte kombinierte Term-Spleiß-Kassette sein. Eine Term-Spleiß-Kassette weist gleichzeitig die Funktionalitäten einer Term-Kassette und einer Spleiß-Kassette auf. Dementsprechend wird hierbei auf die Ausführung zu den Elementen der Term-Kassetten sowie den Elementen der Spleiß-Kassetten verwiesen.

In einer bevorzugten Ausführungsform umfasst die kombinierte Term-Spleiß-Kassette eine vorhergehend beschriebene Term-Kassette und eine vorhergehend beschriebene Spleiß-Kassette, wobei die Term-Kassette lösbar mit der Spleiß-Kassette verbunden ist. Insbesondere kann zumindest ein Teil der Term-Kassette in der kombinierten Term-Spleiß-Kassette unter der Spleiß-Kassette angeordnet sein. Die Anordnung der Term-Kassette unter der Spleiß-Kassette meint hierbei, dass zumindest ein Teil einer Oberseite der Term-Kassette an zumindest einen Teil einer Unterseite der Spleiß-Kassette angrenzt oder anliegt.

Insbesondere in dieser Ausführungsform, jedoch nicht ausschließlich hierfür, kann eine Bodenfläche der Spleiß-Kassette mindestens eine Öffnung aufweisen. Bei einer kombinierten Term-Spleiß-Kassette können hierdurch in vorteilhafter Weise Lichtwellenleiter von der oben liegenden Spleiß-Kassette in die unten liegende Term-Kassette geführt werden. Hierdurch ergibt sich in vorteilhafter Weise, dass ein Lichtwellenleiter nicht erst aus der Spleiß-Kassette herausgeführt, außerhalb der Spleiß-Kassette geführt und dann in die Term-Kassette eingeführt werden muss, was, aufgrund des Mindestbiegeradius, eine erhebliche größere Länge des Lichtwellenleiters und somit einen erhöhten Bauraumbedarf der Halterung erfordern würde.

Die Term-Kassette kann zum Beispiel über eine Rastverbindung lösbar mit der Spleiß-Kassette verbunden sein. Hierzu kann z.B. eine Außenfläche einer Seitenwand der Term-Kassette mindestens ein Rastelement aufweisen. Auch eine Außenfläche einer Seitenwand der Spleiß-Kassette kann mindestens ein Rastelement aufweisen. Weiter kann ein separates Verrastungselement Rastaufnahmen aufweisen, in welche die Rastelemente der Term-Kassette und der Spleiß-Kassette einrastbar sind. Hierbei sind die Rastaufnahmen derart zueinander angeordnet, dass, falls die Rastelemente der Term-Kassette und der Spleiß-Kassette mit dem Verrastungselement verrastet sind, die Term-Kassette zumindest teilweise unterhalb der Spleiß-Kassette angeordnet ist.

Selbstverständlich kann auch das Verrastungselement die Rastelemente und die Term-Kassette und die Spleiß-Kassette die korrespondierenden Rastaufnahmen aufweisen. Auch ist vorstellbar, dass die Term-Kassette das Rastelement und/oder eine Rastaufnahme und die Spleiß-Kassette die korrespondierende Rastaufnahme und/oder das korrespondierende Rastelement aufweist.

Eine kombinierte Term-Spleiß-Kassette kann hierbei vorkonfiguriert sein. Hierbei ist z.B. eine Halterung für Adapter der Term-Kassette mit Adaptern bestückt. In eine erste, kassettenseitige Adapterschnittstelle sind Stecker eingesteckt, an welche vereinzelte Lichtwellenleiter angeschlossen sind. Die vereinzelten Lichtwellenleiter sind also einem bestimmten Adapter zugeordnet. Weiter sind die vereinzelten Lichtwellenleiter durch die mindestens eine Öffnung der Bodenfläche der Spleiß-Kassette in diese eingeführt. In der Spleiß-Kassette sind diese Lichtwellenleiter mit weiteren Lichtwellenleiter (Eingangslichtwellenleitern), die von außerhalb der Spleiß-Kassette in diese eingeführt werden, über Spleiße verbindbar. Hierbei ist die Spleiß-Kassette von einer Oberseite der Spleiß-Kassette her zugänglich, wodurch ein Spleißen bzw. ein Befestigen von Spleiß-Verbindungen ermöglicht wird. Wird nun in eine zweite Adapterschnittstelle, die von einer Außenseite der Term-Kassette zugänglich ist, ein Stecker mit einem angeschlossenen Lichtwellenleiter (Ausgangslichtwellenleiter) eingesteckt, so wird eine Verbindung zwischen einem gewünschten Eingangslichtwellenleiter und einem gewünschten Ausgangslichtwellenleiter hergestellt. Die vorkonfigurierte Term-Spleiß-Kassette erlaubt also in vorteilhafter Weise, dass die Kontaktierung bestimmter Lichtwellenleiter mittels einer Steckverbindung möglich ist, wobei die Kontaktierung in der Spleiß-Kassette der Term-Spleiß-Kassette mittels durch das Spleißen nutzerspezifisch konfigurierbar ist. Die kombinierte Term-Spleiß-Kassette stellt auch ohne die Halterung eine eigenständige Erfindung dar.

Weiter umfasst die Halterung mindestens einen Achshalter und mindestens ein Achselement. Das Achselement ist hierbei an dem Achshalter befestigt.

Der Achshalter kann hierbei z.B. eine rechteckförmige Halteplatte sein.

In einer bevorzugten Ausführungsform ist der Achshalter lösbar mit dem Achselement verbunden. Hierzu kann der Achshalter Rastaufnahmen und das Achselement zu diesen Rastaufnahmen korrespondierende Rastelemente aufweisen oder umgekehrt.

Das Achselement kann hierbei mindestens ein, vorzugsweise jedoch zwei, Achsteile aufweisen. Die Achsteile können hierbei einen kreisförmigen Querschnitt aufweisen. Eine gemeinsame zentrale Längsachse der Achsteile definiert hierbei eine Schwenkachse. Die Achsteile können hierbei über eine, insbesondere rechteckförmige, Verbindungsplatte verbunden sein, wobei die Achsteile über Stege derart mit der Verbindungsplatte verbunden sind, dass die Längsachse der Achsteile parallel zur Verbindungsplatte verläuft und die Achsteile von der Verbindungsplatte beabstandet sind.

Weiter weist das Achselement, insbesondere das mindestens eine Achsteil, einen Führungskanal auf, der zumindest teilweise von dem Achselement oder dem Achsteil umschlossen ist. Vorzugsweise verläuft der Führungskanal entlang der zentralen Längsachse des mindestens einen Achsteils. Somit verläuft der Führungskanal parallel zur Schwenkachse. Z.B. kann das mindestens eine Achsteil zumindest teilweise als Hohlzylinder ausgebildet sein. Der Führungskanal kann hierbei entlang einer gesamten Längserstreckung des Achselements oder des Achsteils verlaufen. Hierbei können eine Stirnseite des Achselements oder des Achsteils jeweils Öffnungen aufweisen, durch die der Führungskanal zugänglich ist. Ist das Achselement oder das Achsteil hohlzylinderförmig ausgebildet, so sind die Öffnungen an den Stirnseiten des Hohlzylinders angeordnet. Durch diese Öffnungen können z.B. Lichtwellenleiter oder Bündelader in den Führungskanal ein- und ausgeführt werden. Die Öffnungen, durch welche Lichtwellenleiter in den Führungskanal ein- oder ausgeführt werden, werden nachfolgend auch als Ein-/Auslassöffnungen des Führungskanals bezeichnet.

Weiter weist die Kassette mindestens ein Element zur drehbaren Lagerung auf. Die Elemente zur drehbaren Lagerung sind vorzugsweise an einer Stirnseite einer Kassette angeordnet. Weiter weist die Stirnseite einer Kassette eine Ein-/Auslassöffnung zum Einführen von Lichtwellenleitern oder Bündeladern in die Kassette oder zum Ausführen aus der Kassette heraus auf.

Erfindungsgemäß ist das mindestens eine Element zur drehbaren Lagerung der Kassette drehbar auf dem mindestens einen Achselement, insbesondere auf den Achsteilen, gelagert.

Hierbei sind Ein-/Auslassöffnungen des Führungskanals und die Ein-/ Auslassöffnung der Kassette derart angeordnet, dass Lichtwellenleiter und/oder Bündeladern unter Einhaltung des Mindestbiegeradius von außen durch eine Ein-/Auslassöffnung in den Führungskanal hinein, durch den Führungskanal, durch eine Ein-/Auslassöffnung aus dem Führungskanal heraus, durch die Ein-/Auslassöffnung der Kassette in die Kassette hinein verlaufen können, wenn die Kassette an dem mindestens einen Achselement befestigt ist. Auf gleiche Weise können Lichtwellenleiter und/oder Bündeladern unter Einhaltung des Mindestbiegeradius aus der Kassette heraus geführt werden.

Insbesondere kann die Kassette Elemente zur drehbaren Lagerung aufweisen, die zumindest teilweise als Hohlzylinder ausgebildet sind. Hierbei ist ein Innendurchmesser der kassettenseitigen Hohlzylinder gleich oder um ein vorbestimmtes Maß größer als ein Außendurchmesser der achselementseitigen Hohlzylinder. Somit ist ein achselementseitiger Hohlzylinder in den Hohlraum eines kassettenseitigen Hohlzylinders einführ- oder einsteckbar.

Hierdurch kann die mindestens eine Kassette schwenkbar um die Schwenkachse an dem Achselement befestigt werden. Wird eine Schwenkbewegung der Kassette ausgeführt, so kann sich der kassettenseitige Hohlzylinder um den achselementseitigen Hohlzylinder drehen, wobei der achselementseitige Hohlzylinder keine Drehbewegung ausführt, also feststeht (feststehende Welle).

In dem mindestens einen Führungskanal ist mindestens ein Lichtwellenleiter und/oder eine Bündelader führbar. Hierbei wird z.B. ein Lichtwellenleiter, die außerhalb einer Kassette verläuft, in den Führungskanal eingeführt oder eingelegt.

Die vorgeschlagene Halterung ermöglicht in vorteilhafter Weise eine Rotation einer Kassette um eine Schwenkachse, wobei ein Führungskanal nicht rotiert bzw. feststeht. Somit beeinflusst eine Rotationsbewegung einer Kassette auch nicht die Lage eines in dem Führungskanal geführten Lichtwellenleiters, wodurch Übertragungseigenschaften des Lichtwellenleiters nicht durch die Rotation in negativer Weise beeinflusst werden.

Die DE 103 14 262 A1 zeigt im Gegensatz zu der vorgeschlagenen Halterung, dass das kassettenseitige Element zur drehbaren Lagerung in, und nicht auf, dem Achselement, insbesondere in den Achsteilen, gelagert ist. Hierbei weist das kassettenseitige Element zur drehbaren Lagerung einen hohlzylinderförmigen Führungskanal auf. Bei einer Rotation der Kassette um eine Schwenkachse rotiert also der Führungskanal ebenfalls, er steht nicht fest. Somit kann eine Rotationsbewegung die Lage eines in dem Führungskanal geführten Lichtwellenleiters beeinflussen.

In einer bevorzugten Ausführungsform ist die mindestens eine Kassette lösbar an dem mindestens einen Achselement befestigbar ist, wobei jedoch das Befestigungselement in einem befestigten Zustand eine Schwenkbarkeit der Kassetten um die Schwenkachse gewährleisten muss. Hierdurch ergibt sich in vorteilhafter Weise, dass ein Achselement mit verschiedenen Kassetten bestückt werden kann und somit modular einsetzbar ist.

Hierzu kann der Achshalter Rastaufnahmen und das Achselement zu diesen Rastaufnahmen korrespondierende Rastelemente aufweisen oder umgekehrt.

In einer bevorzugten Ausführungsform weist ein Umfangsprofil eines Achselements oder ein Umfangsprofil des mindestens einen Achsteils mindestens eine Öffnung auf. Die Öffnung kann schlitzförmig in Richtung einer Längserstreckung entlang des Achselements oder Achsteils ausgebildet sein. Vorzugsweise erstreckt sich die Öffnung entlang einer gesamten Längserstreckung des Achselements oder Achsteils. Weiter vorzugsweise verläuft die Öffnung, insbesondere der Schlitz, parallel zur Schwenkachse. Durch die Öffnung ist der Führungskanal von außerhalb des Achselements oder Achsteils zugänglich. Ist das Achselement oder das Achsteil hohlzylinderförmig ausgebildet, so ist die Öffnung an einer Mantelfläche des Hohlzylinders angeordnet. Durch diese Öffnungen können z.B. Lichtwellenleiter oder Bündelader in den Führungskanal eingelegt oder herausgenommen werden. Ist das Achselement oder das Achsteil hohlzylinderförmig ausgebildet, so ist das Umfangsprofil kreisförmig. Die Öffnung kann hierbei einem Kreisbogen mit einem vorbestimmten Mittelpunktswinkel (Öffnungswinkel), beispielsweise 90 Grad oder 180 Grad, entsprechen.

Weiter bevorzugt ist auch ein Umfangsprofil des Elementes zur Lagerung zumindest teilweise geöffnet. Die Öffnung ist kann ebenfalls schlitzförmig in Richtung einer Längserstreckung entlang des Elements zur Lagerung ausgebildet sein. Vorzugsweise erstreckt sich die Öffnung entlang einer gesamten Längserstreckung Elements zur Lagerung. Weiter vorzugsweise verläuft auch diese Öffnung, insbesondere der Schlitz, parallel zur Schwenkachse. Mittels dieser Öffnung ist das Element zur Lagerung auf das Achselement oder den Achsteil aufsteckbar oder aufrastbar und somit lösbar mit dem Achselement verbindbar.

Weiter ist die Öffnung in dem Umfangsprofil des Elements zur Lagerung vorzugsweise derart ausgebildet, dass in einem aufgesteckten oder aufgerasteten Grundzustand die Öffnung des Umfangsprofils des Elements zur Lagerung sich zumindest teilweise mit der Öffnung des Umfangsprofils des Achselements oder des Achsteils deckt. Hierdurch ist der Führungskanal durch die Öffnung des Umfangsprofils des Elements zur Lagerung und die Öffnung des Umfangsprofils des Achselements oder des Achsteils im Grundzustand von außerhalb zugänglich.

Weiter ist die Öffnung in dem Umfangsprofil des Elements zur Lagerung vorzugsweise derart ausgebildet, dass das Umfangsprofil des Elements zur Lagerung die Öffnung des Umfangsprofils des Achselements oder des Achsteils schließt oder abdeckt, wenn eine mittels des Elements zur Lagerung aufgesteckte oder aufgerastete Kassette aus dem Grundzustand heraus rotiert oder geschwenkt wird. Hierdurch wird ein Herausrutschen eines Lichtwellenleiters aus dem Führungskanal verhindert, wenn die Kassette aus dem Grundzustand heraus geschwenkt wird.

Ist auch das Element zur Lagerung hohlzylinderförmig ausgebildet, so ist die Öffnung an einer Mantelfläche des Hohlzylinders angeordnet. In diesem Fall ist das Umfangsprofil des Elements zur Lagerung kreisförmig. Die Öffnung kann hierbei einem Kreisbogen mit einem vorbestimmten Mittelpunktswinkel entsprechen, wobei der Öffnungswinkel vorzugsweise kleiner als 180 Grad, beispielsweise in einem Intervall von 90 Grad bis 179 Grad liegt. Ist die Öffnung des hohlzylinderförmigen Elements zur Lagerung zumindest teilweise in Deckung mit der Öffnung des hohlzylinderförmigen Achselements oder Achsteils, so können durch diese Öffnungen z.B. Lichtwellenleiter oder Bündelader in den Führungskanal eingelegt oder herausgenommen werden.

Sind das Achselement oder Achsteil und das Element zur Lagerung hohlzylinderförmig ausgebildet, so schneidet eine Mittellinie des Kreisbogens, die durch einen Mittelpunkt des Kreisbogens radial nach außen verläuft, eine Grundfläche des Achshalters mit einem vorbestimmten Winkel, falls das Achselement an dem Achshalter und die Kassette in dem Grundzustand an dem Achselement befestigt ist. Der vorbestimmte Winkel kann hierbei in einem Winkelintervall von beispielsweise 1 bis 89 Grad liegen. Vorzugsweise beträgt der vorbestimmte Winkel 45 Grad oder liegt nahe 45 Grad, z.B. zwischen 30 und 60 Grad. Hierbei bezieht sich der vorbestimmte Winkel nicht auf Bereiche, wo zusätzliche Niederhalter angeordnet sind.

Hierbei kann das Achselement oder das Achsteil entlang der Längserstreckung Bereiche aufweisen, in welchen ein Öffnungswinkel der Öffnung kleiner ist als ein Öffnungswinkel der Öffnung außerhalb dieser Bereiche. Diese Bereiche bilden Niederhalter aus, die eine Verengung der Öffnung des Achselements oder des Achsteils bewirken und ein Herausrutschen von in den Führungskanal eingelegten Lichtwellenleitern oder Bündeladern erschweren. Vorzugsweise ist der Öffnungswinkel im Bereich der Niederhalter halb so groß wie der Öffnungswinkel im Bereich außerhalb der Niederhalter. Weiter vorzugsweise weist das Achselement oder das Achsteil mehrere Niederhalter auf, wobei diese die Öffnung des Achselements oder des Achsteils abwechselnd zu einem ersten Rand der Öffnung des Achselements oder des Achsteils und zu einem zweiten Rand der Öffnung des Achselements oder des Achsteils hin verengen.

In einer weiteren Ausführungsform weist mindestens eine Außenseite der mindestens einen Kassette mindestens ein Befestigungselement auf. Mittels des Befestigungselements ist mindestens ein Element zur Kabelführung an der mindestens einen Außenseite befestigbar. Auch kann das Befestigungselement an der Außenseite das Befestigungselement zur Verbindung einer Term-Kassette mit einer Spleiß-Kassette zu einer kombinierten Term-Spleiß-Kassette sein. Auch kann das Befestigungselement ein universelles Befestigungselement sein mittels dessen Elemente der Glasfasertechnik, z.B. Halterungen, Adapter, Zugentlastungen und weitere Elemente, an der Kassette befestigbar sind. Hierdurch ergibt sich in vorteilhafter Weise, dass eine Kassette für eine gewünschte Ablage von Lichtwellenleiter oder Bündeladern konfigurierbar ist.

In einer weiteren Ausführungsform weist der mindestens eine Achshalter mindestens ein Befestigungselement auf. Mittels dieses Befestigungselement ist der mindestens eine Achshalter und somit die vorgeschlagene Halterung an einem Halteelement befestigbar. Das Halteelement kann z.B. eine Bodenplatte oder Grundbox sein.

Weiter kann der Achshalter auch über ein Kopplungselement mit dem Halteelement verbunden werden. Hierbei wird der Achshalter mittels des Befestigungselements an dem Kopplungselement befestigt. Das Kopplungselement weist wiederum ein Befestigungselement auf, wobei mittels dieses Befestigungselements das Kopplungselement an dem Halteelement befestigbar ist. Vorzugsweise ist das Kopplungselement derart ausgebildet, dass ein an dem Kopplungselement befestigter Achshalter gegenüber einer Bodenplatte oder einer Bodenfläche einer Grundbox eine vorbestimmte Neigung einnimmt. Die Neigung kann beispielsweise 45 Grad betragen. Ist die erfindungsgemäße Halterung mittels des Achshalters direkt oder über ein Kopplungselements z.B. an einer Bodenplatte oder einer Bodenfläche einer Grundbox befestigt, so ist der Führungskanal in bevorzugter Weise von oben zugänglich. Von oben heißt hierbei, dass zumindest ein Teil der Öffnung von Achselement oder Achsteil und zumindest ein Teil der Öffnung des Elements zur Lagerung parallel zur Bodenplatte oder Bodenfläche verlaufen.

Sind das Achselement oder Achsteil und das Element zur Lagerung hohlzylinderförmig ausgebildet, so wird unter einer Zugänglichkeit von oben verstanden, dass eine Mittellinie des Kreisbogens, die durch einen Mittelpunkt des Kreisbogens radial nach außen verläuft, die Bodenplatte oder Bodenfläche mit einem vorbestimmten Winkel schneidet. Der vorbestimmte Winkel kann hierbei in einem Winkelintervall von beispielsweise 30 bis 150 Grad liegen. Vorzugsweise beträgt der Winkel 90 Grad oder liegt nahe 90 Grad, z.B. zwischen 80 und 100 Grad. In diesem Fall schneidet die Mittellinie des Kreisbogens eine Grundfläche des Achshalters in einem Winkel von 45 Grad. Hierbei bezieht sich der vorbestimmte Winkel nicht auf Bereiche von Niederhaltern.

In einer weiteren Ausführungsform umfasst die Halterung mindestens ein Führungselement, wobei das Führungselement mindestens eine teilkreisförmige Führungsrippe aufweist. Das Führungselement ist hierbei an dem Achshalter befestigbar. Hierzu weist das Führungselement ein Befestigungselement und der Achshalter ein korrespondierendes Befestigungselement auf. Vorzugsweise ist das Führungselement seitlich an dem Achshalter befestigbar. Hierdurch können Lichtwellenleiter und/oder Bündeladern seitlich von dem Achshalter geführt werden. Die teilkreisförmigen Führungsrippen weisen hierbei einen Radius von mindestens dem Mindestbiegeradius eines Lichtwellenleiters auf. Sie sind hierbei derart angeordnet, dass Lichtwellenleiter und/oder Bündeladern, die seitlich von dem Achshalter geführt werden unter Einhaltung des Mindestbiegeradius in eine Verlaufsrichtung parallel zur Schwenkachse geführt werden können. Mittels der Führungselementen können also Lichtwellenleiter und/oder Bündeladern seitlich von dem Achshalter geführt werden, wobei einzelne Lichtwellenleiter und/oder Bündeladern dann mittels der teilkreisförmigen Führungsrippen hin zu einer Ein-/Auslassöffnung des Führungskanals geführt werden können.

Die Erfindung wird nachfolgend anhand eines Ausführungsbeispiels näher erläutert. Die Figuren zeigen:
- Fig. 1: eine Explosionszeichnung einer Halterung,
- Fig. 2: eine perspektivische Ansicht eines Achshalters,
- Fig. 3: eine perspektivische Ansicht eines Achselements,

- Fig. 4: eine perspektivische Ansicht eines weiteren Achselements,
- Fig. 5: eine perspektivische Ansicht einer Term-Kassette,
- Fig. 6: eine perspektivische Ansicht einer Spleiß-Kassette,
- Fig. 7: eine perspektivische Ansicht einer Term-Spleiß-Kassette,
- Fig. 8: eine Explosionszeichnung der in Fig. 7 dargestellten Term-Spleiß-Kassette,
- Fig. 9: eine Seitenansicht einer Halterung,
- Fig. 10: eine weitere Seitenansicht einer Halterung und
- Fig. 11: eine perspektivische Ansicht eines Führungselements.

Im Folgenden bezeichnen gleiche Bezugszeichen Elemente mit gleichen oder ähnlichen technischen Eigenschaften.

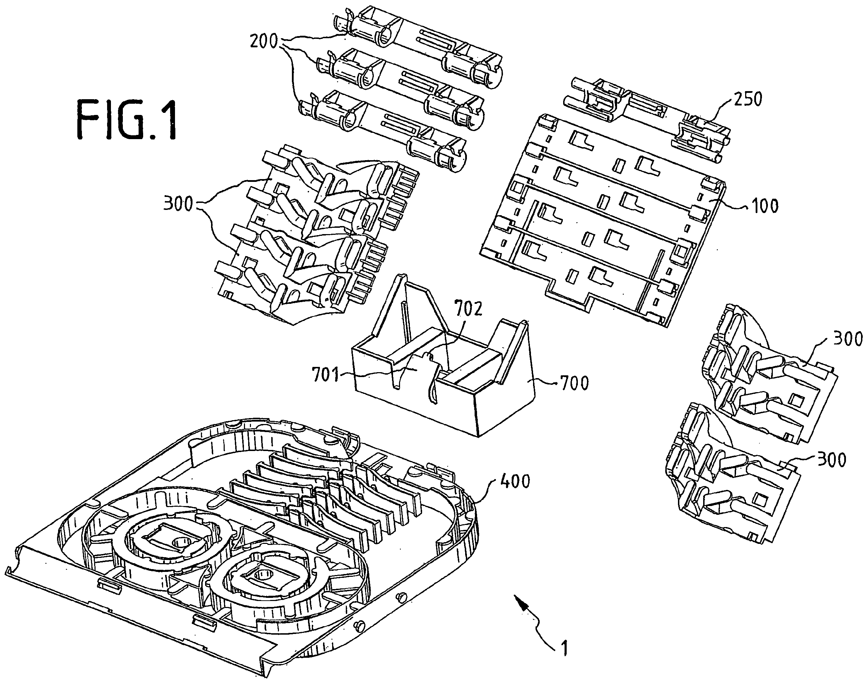

Fig. 1 zeigt eine Explosionszeichnung einer Halterung 1. Die Halterung 1 umfasst ein Achshalter 100, drei Achselemente 200 und ein weiteres Achselement 250. Weiter umfasst die Halterung 1 Elemente 300 zur Kabelführung und eine Spleiß-Kassette 400. Weiter ist ein Kopplungselement 700 dargestellt.

Die einzelnen Bestandteile der Halterung 1 werden nachfolgend detailliert beschrieben.

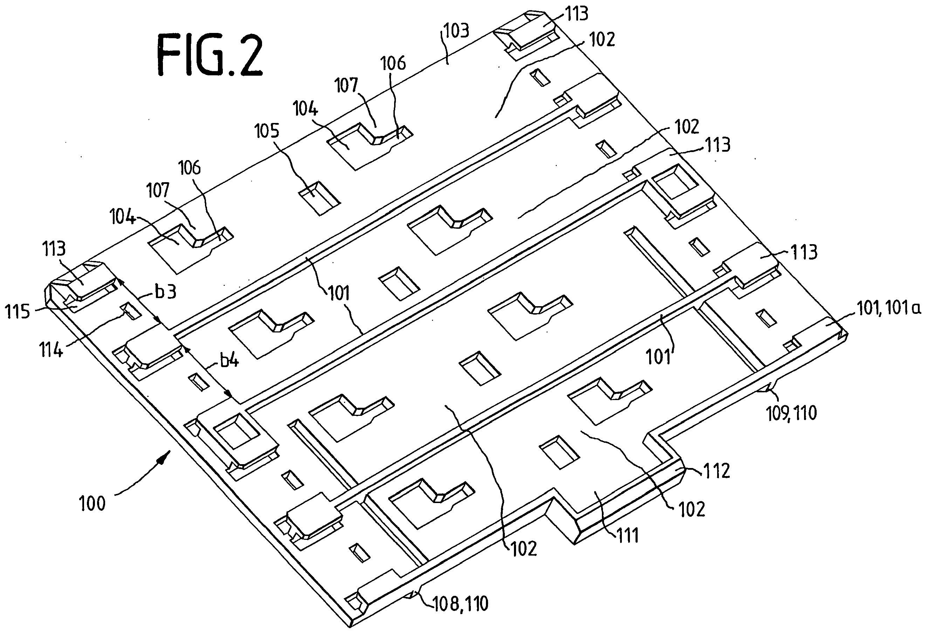

Fig. 2 zeigt eine perspektivische Darstellung des Achshalters 100, der hierbei als rechteckförmig Platte ausgebildet. Der Achshalter 100 ist durch Trennrippen 101 in horizontale Halteabschnitte 102 unterteilt. Die Trennrippen 101 ragen hierbei senkrecht aus einer Oberfläche 103 des Achshalters 100 hervor. Eine untere Trennrippe 101 wird hierbei auch als Anschlagrippe 101a bezeichnet.

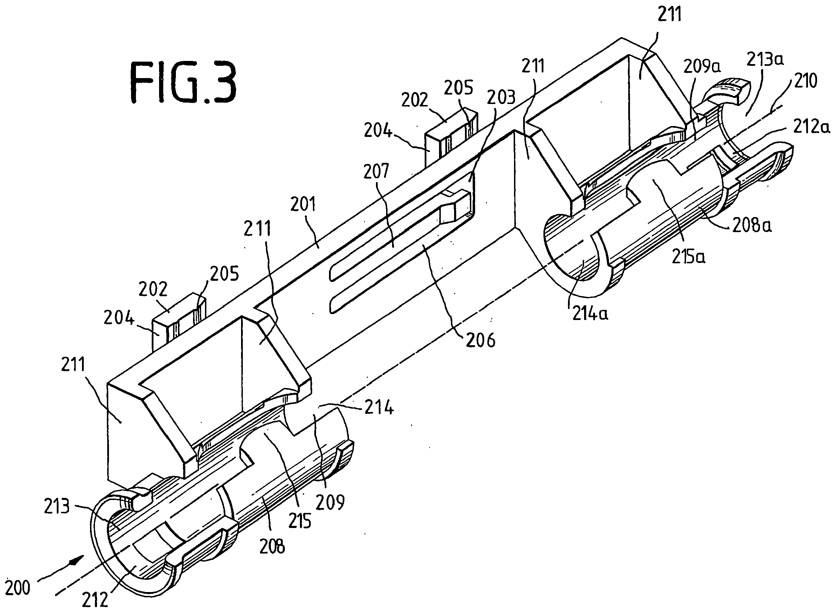

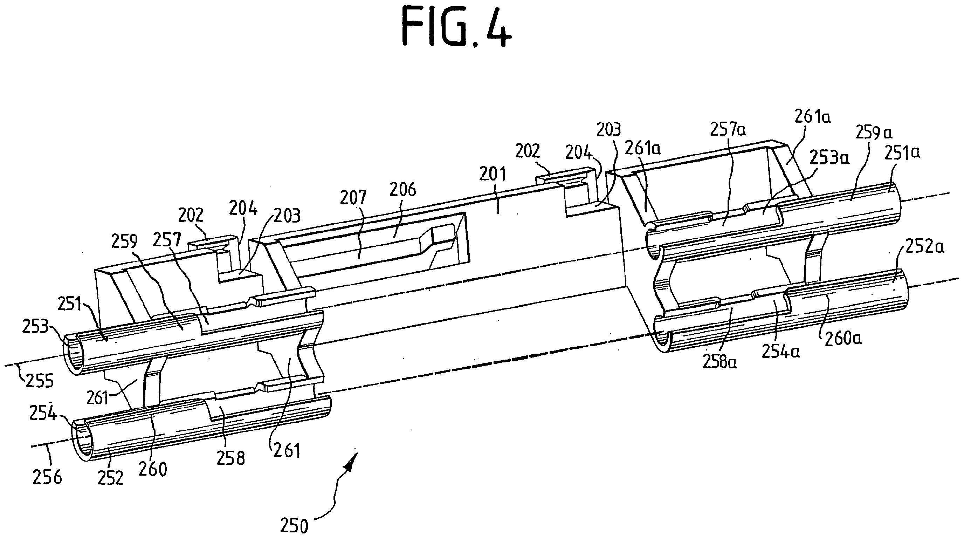

Jeder Halteabschnitt 102 weist hierbei zwei Rastöffnungen 104 und eine weitere Öffnung 105 auf. Hierbei weisen die Rastöffnungen 104 jeweils einen Rastschlitz 106 auf, der parallel zu den Trennrippen 101 in Richtung einer Seite des Achshalters hin verläuft und in die Rastöffnung 104 mündet. In die Rastöffnung 104 ist hierbei ein Rastelement 202 eines z.B. in Fig. 3 und Fig. 4 dargestellten Achselement 200, 250 einsetzbar. Das Rastelement 202 ist hierbei als ein im Querschnitt L-förmiger Steg ausgebildet, der erhaben über einer Rückseite des Achselements 200, 250 ist. Das L-förmige Rastelement 202 weist hierbei einen ersten Schenkel 203 und einen zweiten Schenkel 204 auf. Der erste Schenkel 203 und der zweiten Schenkel 204 umfassen hierbei ein Volumen, welches nachfolgend als Unterschneidung 205 bezeichnet wird.

Um das Rastelement 202 mit dem Achshalter 100 zu verrasten, wird das Rastelement 202 in eine Rastöffnung 104 eingesetzt. Hiernach wird das der erste Schenkel 203 des Achsteils 200, 250 in den Rastschlitz 106 geschoben. Hierbei gleitet ein relativ zum Achshalter 100 über dem Rastschlitz 106 angeordnetes Teil 107 des Achshalters 100 in die Unterschneidung 205 während der zweite Schenkel 204 den Teil 107 des Achshalters hintergreift. Vorzugsweise wird hierbei der erste Schenkel 203 des Achsteils 200, 250 im Rastschlitz 106 geklemmt. Somit ist das Achsteil 200, 250 mit dem Achshalter 100 verrastet. Das Achsteil 200, 250 kann gelöst werden, indem der erste Schenkel 203 aus dem Rastschlitz 106 herausgeschoben wird, wobei eine Klemmkraft des Rastschlitzes 106 auf den ersten Schenkel 203 überwunden werden muss. Dann kann das Achsteil 200, 250 mit dem Rastelement 202 aus der Rastöffnung 104 herausgenommen werden.

An einem unteren Ende des Achshalters 100 weist dieser rückseitig eine erste Befestigungsrippe 108 und eine zweite Befestigungsrippe 109 auf. Die Befestigungsrippen 108, 109 weisen ebenfalls ein im Querschnitt L-förmiges Profil auf und sind erhaben über einer Rückseite des Achshalters 100. Die L-förmigen Befestigungsrippen 108, 109 weisen hierbei einen ersten Schenkel 110 und jeweils einen nicht dargestellten zweiten Schenkel auf. Hierbei sind der zweite Schenkel der ersten Befestigungsrippe 108 und der zweite Schenkel der zweiten Befestigungsrippe 109 einander zugewandt, so dass sich von den ersten Schenkeln 110 und zweiten Schenkeln umfasst, ebenfalls nicht dargestellte, Unterschneidungen zueinander hin öffnen. Die Befestigungsrippen 108, 109 dienen einer Befestigung des Achshalters 100 an einem z.B. in Fig. 1 dargestellten Kopplungselement 700. Hierbei weist das Kopplungselement 700 zu den Befestigungsrippen 108, 109 korrespondierende Befestigungsrippen auf, die ebenfalls ein im Querschnitt L-förmiges Profil aufweisen. Der Achshalter 100 kann auf das Kopplungselement 700 aufgesteckt werden, wobei ein zweiter Schenkel einer L-förmigen ersten Befestigungsrippe des Kopplungselements 700 in die von dem ersten Schenkel 110 und dem zweiten Schenkel der ersten Befestigungsrippe 108 umfasste Unterschneidung gleitet. Analog gleitet ein zweiter Schenkel einer L-förmigen zweiten Befestigungsrippe des Kopplungselements 700 in die von dem ersten Schenkel 110 und dem zweiten Schenkel der zweiten Befestigungsrippe 109 umfasste Unterschneidung.

Weiter weist der Achshalter 100 an einem unteren Ende einen Rastvorsprung 111 auf. Im Bereich des Rastvorsprungs 111 weist die Anschlagrippe 101a ein abgeschrägten Teil 112 der Anschlagrippe 101a auf. Mittels des Rastvorsprungs 111 kann der Achshalter 100 mit dem Kopplungselement 700 verrastet werden. Das Kopplungselement 700 weist hierbei ein mit dem Rastvorsprung wechselwirkende Rastzunge 701 auf. Die Rastzunge 701 weist an einem oberen Ende eine Rastnase 702 auf. Hierbei verdickt sich die Rastnase 702 von ihrem oberen Ende bis zu einer nicht dargestellten Nasenkante. Der sich verdickende Teil kann hierbei als Nasenbein bezeichnet werden. Beim Aufstecken des Achshalters 100 gleitet der abgeschrägte Teil 112 der Anschlagrippe 101a über das Nasenbein, wodurch die Rastzunge entgegen einer Federkraft der Rastzunge 701 aus einer Ausgangsstellung von dem Rastvorsprung 111 weggedrückt wird.

Ist der Achshalter 100 vollständig aufgesteckt, so drückt der abgeschrägte Teil die Rastzunge 701 nicht mehr von dem Rastvorsprung 111 weg. Die Federkraft der Rastzunge 701 bewirkt deren Rückkehr in ihre Ausgangsstellung. Hierbei schiebt sich die Nasenkante über die Anschlagrippe 101a, wodurch der Achshalter 100 mit dem Kopplungselement 700 verrastet wird.

Die vorhergehend beschriebene Art der Verrastung mittels Rastzunge, Rastnase und Rastvorsprung wird nachfolgend als rastzungenbasierte Verrastung bezeichnet.

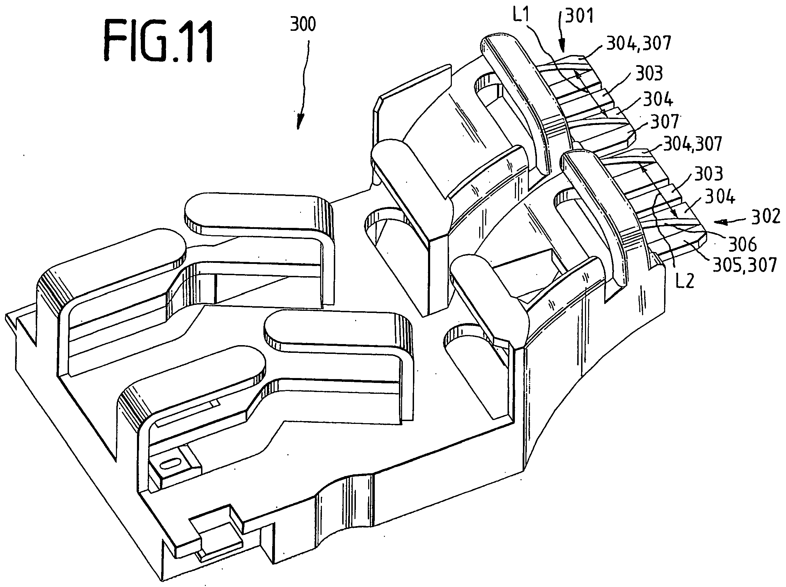

Weiter weisen die Trennrippen 101 an ihren Enden jeweils Niederhalter 113 auf. Die Niederhalter 113 ragen hierbei über die Oberfläche 103 des Achshalters 100 und schließen mit dieser eine Unterschneidung ein. Die Niederhalter 113 dienen hierbei dem Aufstecken von Elemente 300 zur Kabelführung, die z.B. in Fig. 11 dargestellt sind. Ein Element 300 zur Kabelführung weist hierbei ein erstes Aufsteckelement 301 und ein zweites Aufsteckelement 302 auf. Ein Aufsteckelement 301, 302 umfasst hierbei eine Rastzunge 303 und zwei Aufsteckzungen 304. Hierbei ist die Rastzunge 303 freistehend zwischen den Aufsteckzungen 304 angeordnet.

Eine Aufsteckzunge 304 weist hierbei ein im Querschnitt T-förmiges Profil, welches einen ersten Schenkel 305 und einen dazu senkrecht angeordnete zweiten Schenkel 306 umfasst. Beim Aufstecken gleiten die relativ zum Aufsteckelement 301, 302 außen liegenden Teile 307 der ersten Schenkel 305 in die von den Niederhaltern 113 und der Oberfläche 103 des Achshalters 100 eingeschlossenen Unterschneidungen. Hierbei werden die zweiten Schenkel 306 der Aufsteckzungen 304 an Seitenflächen 115 der Niederhalter 113 vorbeigeführt.

Mittels der Rastzunge 303 und einer als Rastvorsprung dienenden Rastöffnung 114 im Achshalter 100 kann die vorhergehend beschriebene rastzungenbasierte Verrastung von Achshalter 100 und Element 300 zur Kabelführung beim Aufstecken durchgeführt werden. Dabei kann eine an der Unterseite der Rastzunge 303 angeordnete Rastnase in die Rastöffnung 114 eingreifen.

Hierbei ist zu beachten, dass ein Abstand b1 zwischen den zweiten Schenkel 306 der Aufsteckzungen 304 des ersten Aufsteckelements 301 ungleich einem Abstand b2 zwischen den zweiten Schenkel 306 der Aufsteckzungen 304 des zweiten Aufsteckelements 301 ist. Dementsprechend ist ein Abstand b3 zwischen gegenüberliegenden Seitenflächen 115 von Niederhaltern 113 eines Halteabschnitts 102 nicht gleich einem Abstand b4 zwischen Seitenflächen 115 von Niederhaltern 113 eines vertikal benachbarten Halteabschnitts 102. Hierdurch wird in vorteilhafter Weise gewährleistet, dass ein Element 300 zur Kabelführung nur an bestimmten Positionen auf den Achshalter 100 gesteckt werden kann. Insbesondere können Niederhalter 113 von benachbarten Trennrippen 101 derart ausgebildet sein, dass sie die Abstände b3, b4 zwischen gegenüberliegenden Seitenflächen 115 von Niederhaltern 113 eines Halteabschnitts 102 herstellen.

Fig. 3 zeigt ein erstes Achselement 200. Das Achselement 200 umfasst eine Grundplatte 201 des Achshalters 200. An einer Rückseite der Grundplatte 201 sind zwei Rastelemente 202 angeordnet, die vorhergehend beschrieben wurden. Die L-förmigen Rastelemente 202 weist hierbei einen ersten Schenkel 203 und einen zweiten Schenkel 204 auf. Der erste Schenkel 203 und der zweiten Schenkel 204 umfassen eine Unterschneidung 205.

Weiter ist in einer Öffnung 206 der Grundplatte 201 eine freistehende Rastzunge 207 angeordnet. Hierbei kann mittels der Rastzunge 207 eine rastzungenbasierte Verrastung eines Achselements 200 und des Achshalters 100 durchgeführt werden. Hierbei dienen die Rastöffnungen 104 auch als Rastöffnungen für die rastzungenbasierte Verrastung. Hierbei schiebt sich eine Nasenkante über einen Rand der Rastöffnung 104, wenn der erste Schenkel 203 des Achsteils 200 in einen Rastschlitz 106 geschoben wird. Auch ist vorstellbar, dass Öffnungen 105 des Achshalters 100 (siehe Fig. 1) als Rastöffnungen für die rastzungenbasierte Verrastung dienen.

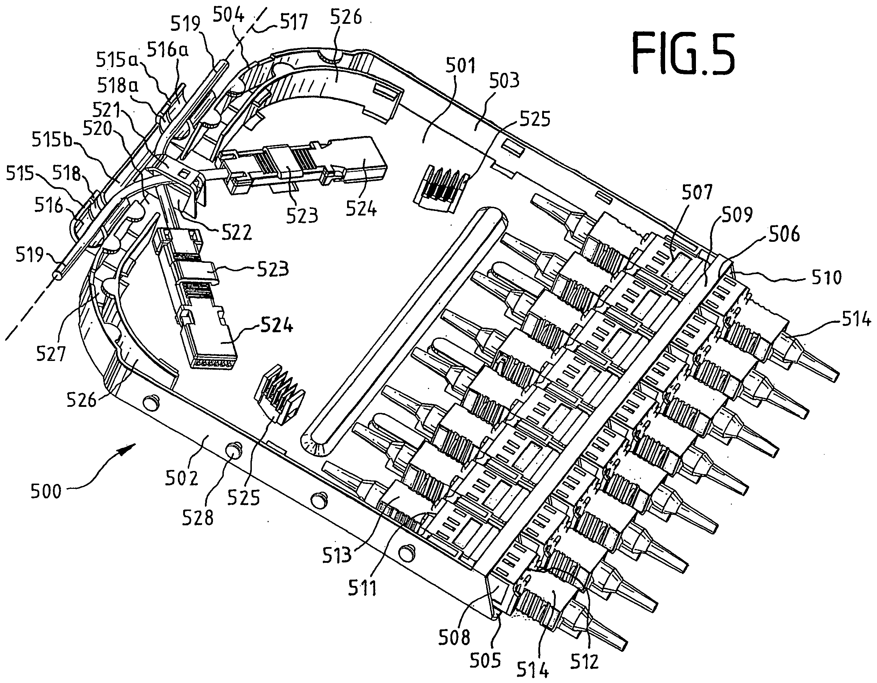

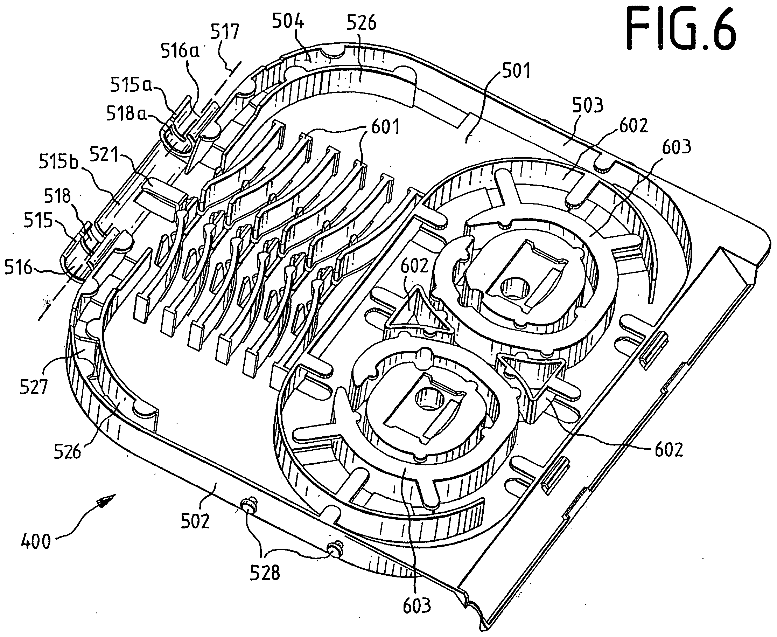

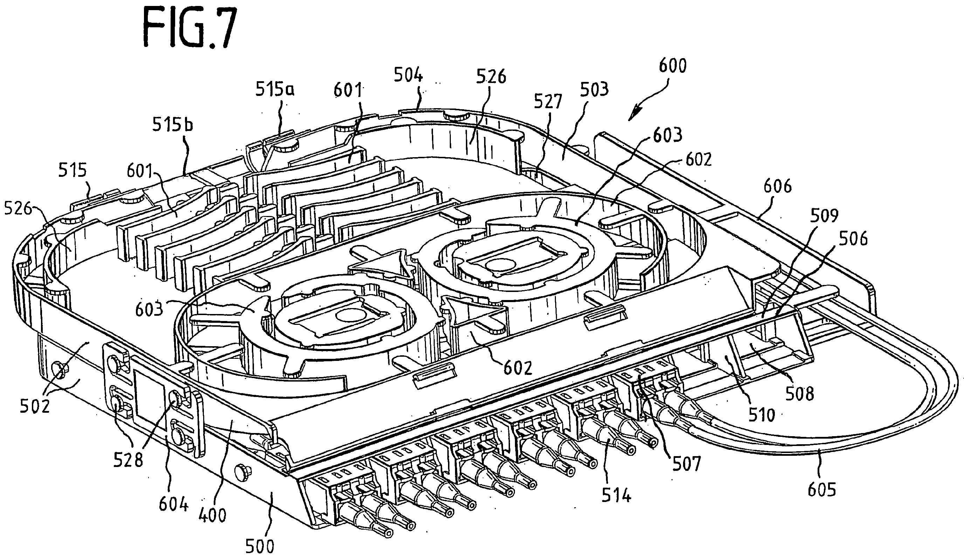

Weiter umfasst das Achselement 200 ein erstes Achsteil 208 und ein zweites Achsteil 208a. Die Achsteile 208, 208a sind hohlzylinderförmig ausgebildet. Weiter dargestellt ist eine dem ersten und zweiten Achsteil 208, 208a gemeinsame zentrale Längsachse 210, die gleichzeitig eine Mittelachse der Hohlzylinder ist. Wie später näher erläutert, bildet die zentrale Längsachse 210 gleichzeitig eine Schwenkachse für eine Term-Kassette 500 (siehe Fig. 5) oder eine Spleiß-Kassette 400 (siehe Fig. 6) oder eine Term-Spleiß-Kassette 600 (siehe Fig. 7), wobei die Kassetten 400, 500, 600 um die Schwenkachse schwenkbar sind.

Die Achsteile 208, 208b sind hierbei durch Haltestege 211 von der Grundplatte 201 beabstandet angeordnet. Da die Achsteile 208, 208a hohlzylinderförmig ausgebildet sind, weisen die Achsteile 208, 208a jeweils einen Führungskanal 212, 212a auf. Diese Führungskanäle 212, 212a verlaufen entlang einer gesamten Längserstreckung der Achsteile 208, 208a und entlang der zentralen Längsachse 210. Somit verlaufen die Führungskanäle 212, 212a parallel zur Schwenkachse.

Das erste Achsteil 208 weist hierbei eine Öffnung 213 der äußeren Stirnseite und eine Öffnung 214 der inneren Stirnseite auf, wodurch der Führungskanal 212 durch die Öffnungen 213, 214 zugänglich ist. Analog weist das zweite Achsteil 208a hierbei eine Öffnung 213a der äußeren Stirnseite und eine Öffnung 214a der inneren Stirnseite auf, wodurch der Führungskanal 212a durch die Öffnungen 213a, 214a zugänglich ist. Durch diese Öffnungen 213, 214, 213a, 214a können z.B. Lichtwellenleiter oder Bündelader in die Führungskanäle 212, 212a ein- und ausgeführt werden.

Eine Mantelfläche der Achsteile 208, 208a weist einen Schlitz 209, 209a auf, der sich in Richtung einer gesamten Längserstreckung entlang der Achsteile 208, 208a erstreckt. Der Schlitz verläuft hierbei parallel zur zentralen Längsachse 210 und verbindet beim ersten Achsteil 208 die Öffnung 213 und die Öffnung 214 und beim zweiten Achsteil 208a die Öffnung 213a und die Öffnung 214. Durch den Schlitz 209, 209a ist der Führungskanal 210, 210a von außerhalb des Achsteils 208, 208a zugänglich. Insbesondere können durch den Schlitz 209, 209a z.B. Lichtwellenleiter oder Bündelader in den Führungskanal 210, 210a eingelegt oder herausgenommen werden.

Betrachtet man einen Querschnitt durch das Achsteil 208 senkrecht zur Längsachse 210, so weist ein Umfangsprofil eine kreisbogenförmige Öffnung mit einem bestimmten Mittelpunktswinkel (Öffnungswinkel) auf, der z.B. 90 Grad beträgt.

Entlang der Längserstreckung weist das Achsteil 208, 208a Niederhalter 215, 215a auf. Betrachtet man einen Querschnitt durch das Achsteil 208 senkrecht zur Längsachse 210 im Bereich eines Niederhalters 215, 215a, so weist ein Umfangsprofil eine kreisbogenförmige Öffnung mit einem Öffnungswinkel auf, der kleiner als 45 Grad ist. Durch die Niederhalter 215, 215a wird eine Verengung des Schlitzes 209, 209a bedingt, wodurch ein Herausrutschen von in den Führungskanal 210, 210a eingelegten Lichtwellenleitern oder Bündeladern erschwert wird.

Eine Mittellinie der kreisbogenförmigen Öffnung außerhalb von Bereichen von Niederhaltern 215, 215a, die durch einen Mittelpunkt des Kreisbogens radial nach außen verläuft, schneidet die Grundfläche 201 unter einem Winkel von 45 Grad.

Fig. 4 zeigt ein zweites Achselement 250. Hierbei sind gleiche Elemente des in Fig. 3 dargestellten ersten Achselements 200 und des zweiten Achselements 250 mit gleichen Bezugszeichen bezeichnet. Im Unterschied zum ersten Achselement 200 weist das zweite Achselement 250 ein erstes Achsteilpaar mit zwei Achsteilen 251, 251a und ein zweites Achsteilpaar mit zwei Achsteilen 252, 252a auf. Wie beim ersten Achselement 200 sind alle Achsteile 251, 251a, 252, 252a hohlzylinderförmig ausgebildet und weisen jeweils einen Führungskanal 253, 253a, 254, 254a auf. Hierbei ist ein Durchmesser der Führungskanäle 253, 253a, 254, 254a kleiner als ein Durchmesser von Führungskanälen 209, 209a des ersten Achselements 200.

Die Achsteil 251, 251a des ersten Achsteilpaares weisen eine gemeinsame zentrale Längsachse 255 auf. Analog weisen die Achsteile 252, 252a eine gemeinsame zentrale Längsachse 256 auf. Die zentralen Längsachsen 255, 256 sind hierbei parallel zueinander. Analog zu den Achsteilen 208, 208a des ersten Achselements 200 weisen Mantelflächen der Achsteile 251, 251a, 252, 252a entlang ihrer gesamten Längserstreckung Schlitze 257, 257a, 258, 258a, wobei in Teilbereichen der Schlitze Niederhalter 259, 259a, 260, 260a ausgebildet sind.

Die Achsteile 251, 251a, 252, 252a sind hierbei durch Haltestege 261, 261a von der Grundplatte 201 beabstandet angeordnet. Hierbei sind der Achsteil 251 des ersten Achsteilpaares und der Achsteil 252 des zweiten Achsteilpaares über gemeinsame Haltestege 261 von der Grundplatte 201 beabstandet angeordnet. Analog sind der Achsteil 251a des ersten Achsteilpaares und der Achsteil 252a des zweiten Achsteilpaares über gemeinsame Haltestege 261a von der Grundplatte 201 beabstandet angeordnet.

An dem zweiten Achselement 250 können hierbei mittels der beiden Achsteilpaare zwei Kassetten an dem Achselement 250 schwenkbar befestigt werden. Eine erste Kassette kann z.B. mittels der Achsteile 251, 251a und eine zweite Kassette mittels der Achsteile 252, 252a an dem Achselement 250 schwenkbar befestigt werden.

Fig. 5 zeigt eine perspektivische Ansicht einer Term-Kassette 500. Die Term-Kassette 500 weist eine Bodenfläche 501, eine linke Seitenwand 502, eine rechte Seitenwand 503 und ein obere Stirnwand 504 auf. Hierbei ist dargestellt, dass ein Übergang der linken und rechten Seitenwand 502, 503 zu der oberen Stirnwand 504 einen abgerundeten Verlauf aufweist. An einer unteren Stirnseite 505 ist die Term-Kassette 500 offen und bildet eine Halterung 506 für Adapter 507 aus.

Die Halterung 506 für Adapter 507 weist hierbei mehrere Einsteckplätze 508 auf. Einsteckplätze werden hierbei durch die Bodenfläche 501, eine entlang der unteren Stirnseite verlaufenden Haltesteg 509 und durch Trennrippen 510 und/oder die linke oder rechte Seitenwand 502, 503 gebildet. Hierbei weist die Bodenfläche 501 nicht dargestellte rechteckförmige Vertiefungen auf. In die Einsteckplätze 508 können hierbei Adapter 507 eingesteckt und somit an der Term-Kassette 500 befestigt werden. In Fig. 5 ist dargestellt, dass in alle acht Einsteckplätze 508 Adapter 507 eingesteckt sind.

Die Adapter 507 weisen hierbei eine Eingangsseite 511 und eine Ausgangsseite 512 auf. Die Eingangsseite 511 weist hierbei einen nicht dargestellten Steckkontakt für einen Glasfaserstecker 513 und die Ausgangsseite einen ebenfalls nicht dargestellten Steckkontakt für einen weiteren Glasfaserstecker 514 auf. In Fig. 5 ist dargestellt, dass der Glasfaserstecker 513 und der weitere Glasfaserstecker 514 gleich sind, selbstverständlich können die Steckkontakte auch für verschiedene Arten von Glasfasersteckern ausgebildet sein. Hierbei ist die Ausgangsseite 512 von außerhalb und die Innenseite 511 von innerhalb der Term-Kassette 500 zugänglich. In Fig. 5 ist dargestellt, dass in alle Steckkontakte der Adapter 507 eingangsseitig Glasfaserstecker 513 und ausgangsseitig Glasfaserstecker 514 gesteckt sind.

Weiter zeigt Fig. 5 ein erstes Element 515 und ein zweites Element 515a zur drehbaren Lagerung der Term-Kassette 500. Die Elemente 515, 515a zur drehbaren Lagerung sind an einer Außenseite der oberen Stirnwand 504 angeordnet.

Die Elemente 515, 515a sind hierbei hohlzylinderförmig ausgebildet und weisen jeweils einen Achskanal 516, 516a auf. Weiter dargestellt ist eine dem ersten und zweiten Element 515, 515a gemeinsame zentrale Längsachse 517, die gleichzeitig eine Mittelachse der Hohlzylinder ist. Ein Innendurchmesser der Elemente 515, 515a ist um ein vorbestimmtes Maß größer als ein Außendurchmesser der Achsteile 208, 208a des ersten Achsteils (siehe Fig. 3). Somit ist ein achselementseitiger Hohlzylinder in den Hohlraum eines kassettenseitigen Hohlzylinders einführ- oder einsteckbar.

Diese Achskanäle 516, 516a verlaufen entlang einer gesamten Längserstreckung der Elemente 515, 515a und entlang der zentralen Längsachse 517.

Eine Mantelfläche der Elemente 515, 515a weist einen Schlitz 518, 518a auf, der sich in Richtung einer gesamten Längserstreckung entlang der Elemente 515, 515a erstreckt. Der Schlitz 518, 518a verläuft hierbei parallel zur zentralen Längsachse 517.

Betrachtet man einen Querschnitt durch das Element 515, 515a senkrecht zur Längsachse 517, so weist ein Umfangsprofil des Elements 515, 515a eine kreisbogenförmige Öffnung mit einem bestimmten Mittelpunktswinkel (Öffnungswinkel) auf, der z.B. 150 Grad beträgt. Eine Mittellinie der kreisbogenförmigen Öffnung die durch einen Mittelpunkt des Kreisbogens radial nach außen verläuft, steht hierbei senkrecht auf der Bodenfläche 501.

Mittels der Elemente 515, 515a zur drehbaren Lagerung und den Achsteilen 208, 208a ist die Term-Kassette 500 schwenkbar an dem Achselement 200 befestigbar. Beim Befestigen wird die Term-Kassette 500 derart positioniert, dass der erste Achsteil 208 über den Schlitz 518 in den ersten Achskanal 516 und das zweite Achsteil 208a über den Schlitz 518a in den zweiten Achskanal 516a eingesetzt wird. Im eingesetzten Zustand umklammert also das erste Element 515 zur drehbaren Lagerung den ersten Achsteil 208 und das zweite Element 515a zur drehbaren Lagerung den zweiten Achsteil 208a. Die Umklammerung wird durch den Öffnungswinkel der kreisbogenförmigen Öffnung im Umfangsprofil der Elemente 515, 515a zur drehbaren Lagerung realisiert, der hierfür kleiner als 180 Grad sein muss.

Im eingesetzten Zustand liegt die zentrale Längsachse 210 der Achsteile 208, 208a auf der zentralen Längsachse 517 der Elemente 515, 515a. Die Term-Kassette 500 ist hierbei um die von der zentralen Längsachse 210 gebildeten Schwenkachse um die Achsteile 208, 208a schwenkbar. Wird die Term-Kassette 500 um die Achsteile 208, 208a geschwenkt, so gleitet eine Innenfläche der Elemente 515, 515a zur drehbaren Lagerung über eine Außenfläche der Achsteile 208, 208a. Es dreht sich also der kassettenseitige Hohlzylinder um den achselementseitigen Hohlzylinder, wobei der achselementseitige Hohlzylinder keine Drehbewegung ausführt, also feststeht (feststehende Welle).

Weiter ist eine Haltezunge 515b zwischen den Elementen 515, 515a angeordnet. Diese weist ebenfalls einen nach oben gekrümmten Verlauf auf, um eine Schwenkbewegung der Term-Kassette 500 nicht zu behindern.

In Fig. 5 ist weiter ein exemplarischer Verlauf von einem Kabel 519 (z.B. einer Bündelader) dargestellt. Das Kabel 519 verläuft hierbei teilweise in den Achskanälen 516, 516a. Hierbei sei angemerkt, dass die Term-Kassette 500 in Fig. 5 nicht an einem Achselement 200 befestigt ist. Wäre die Term-Kassette 500 an einem Achselement 200 befestigt, so würde das Kabel 519, die in Fig. 5 in den Achskanälen 516, 516a verlaufen, in den Führungskanäle 209, 209a der Achskanäle 208, 208a verlaufen.

Die obere Stirnwand 504 der Term-Kassette 500 weist einen Einlass-/ Auslassabschnitt 520 auf. Zentral im Einlass-/Auslassabschnitt 520 ist ein Niederhalter 521 auf der Bodenfläche 501 angeordnet. Der Niederhalter 521 bildet mit der Bodenfläche 501 eine Unterschneidung 522 aus. Hierbei wird das Kabel 519 über die Achskanäle 516, 516a in die Term-Kassette 500 und den Ein-/Auslassabschnitt 520 in einen Innenraum der Term-Kassette 500 eingeführt. Das Kabel wird hierbei auch durch die Unterschneidung 522 geführt.

In Fig. 5 ist dargestellt, dass die Term-Kassette 500 auch Elemente 523 zur lösbaren Befestigung von Fan-Out-Elementen 524 umfasst, mittels derer die Lichtwellenleiter des Kabels 519 vereinzelt und mit ihren Glasfasersteckern 513 in die Adapter 507 gesteckt werden können.

Weiter weist die Term-Kassette Elemente zur Führung von Lichtwellenleitern und/oder Adern auf. Exemplarisch sind zwei Elemente 525 zur Führung von Lichtwellenleitern dargestellt. Das Element 525 weist mehrere, senkrecht aus der Bodenfläche 501 hervorstehende Führungsrippen auf, die voneinander beabstandet sind und zwischen den nicht dargestellten Lichtwellenleitern geführt werden.

Weiter sind Führungsrippen 526 zur Führung von Bündeladern oder Lichtwellenleitern dargestellt. Diese verlaufen parallel zu einem gekrümmten Teil der oberen Stirnwand 504 und stehen senkrecht aus der Bodenfläche 501 hervor. Zwischen einer Innenseite der oberen Stirnwand 504 und der Führungsrippe 526 wird daher ein teilweise gekrümmter Führungskanal ausgebildet. Ein Radius der Krümmung entspricht hierbei mindestens einem Mindestbiegeradius der Lichtwellenleiter oder Adern. Im Bereich des Führungskanals weist die Bodenfläche 501 mindestens eine Öffnung 527 auf. Durch die Öffnung 527 sind Lichtwellenleiter oder Adern in die Term-Kassette 500 ein- oder herausführbar. Weiter dargestellt sind Rastnasen 528, die an einer Außenseite der rechten und linken Seitenwand 502, 503 angeordnet sind, mittels derer zusätzliche Elemente an der Term-Kassette 500 befestigbar sind.

Fig. 6 zeigt eine perspektivische Ansicht einer Spleiß-Kassette 400. Die Spleiß-Kassette 400 ist hierbei ähnlich zu der Term-Kassette 500 (siehe Fig. 5) aufgebaut. Daher werden für gleiche Elemente gleiche Bezugszeichen verwendet. Die Spleiß-Kassette 400 weist hierbei insgesamt sechs Spleiß-Halter 601, wobei mittels eines Spleiß-Halters 601 jeweils zwei nicht dargestellte Spleiß-Verbindungen klemmbar, also befestigbar, sind.

Weiter weist die Spleiß-Kassette 400 Elemente zur Führung und Ablage von Lichtwellenleitern auf. Die Elemente zur Führung und Ablage umfassen hierbei Führungsrippen 602 und Führungskörper 603. Die Führungskörper sind hierbei erhaben über einer Bodenfläche 501 der Spleiß-Kassette 600. Ein Verlauf der Führungsrippen 602 und eine Kontur der Führungskörper 603 definieren mehrere zumindest teilweise kreisförmige oder ovale Verläufe, deren jeweilige Radien mindestens einem Mindestbiegeradius der Lichtwellenleiter entsprechen. Die Führungskörper 603 und die Führungsrippen 602 sind derart zueinander angeordnet, dass mehrere kreisförmige Führungen an definierten Bereichen tangential ineinander übergehen.

Die Spleiß-Kassette kann mittels der Elemente 515, 515a zur drehbaren Lagerung in gleicher Weise wie die Term-Kassette 500 an einem Achselement 200 (siehe Fig. 3) befestigt werden.

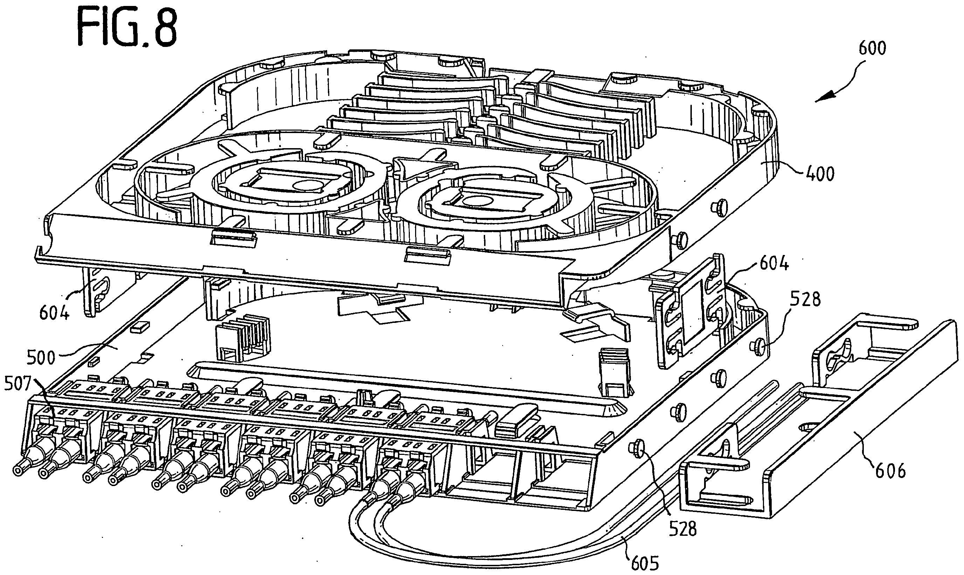

Fig. 7 zeigen eine perspektivische Seitenansicht einer Term-Spleiß-Kassette 600. Die Term-Spleiß-Kassette 600 umfasst hierbei die in Fig. 5 dargestellte Term-Kassette 500 und die in Fig. 6 dargestellte Spleiß-Kassette 400. Die Term-Kassette 500 und die Spleiß-Kassette 400 sind hierbei über eine Rastplatte 604 miteinander verbunden. Hierbei weist die Rastplatte 604 vier Schlitze auf, in welche die Rastnasen 528 einschiebbar sind. Somit ist eine kompakte, vorkonfektionierbare Term-Spleiß-Kassette 600 realisierbar. Somit können beispielsweise zwölf ankommende Lichtwellenleiter mit zwölf Pigtails in der Spleiß-Kasse 400 verspleißt werden, wobei die Pigtails in die Term-Kassette 500 geführt und dort in die Rückseite der Adapter 507 eingesteckt werden können. Im dargestellten Beispiel ist die Term-Spleiß-Kassette 600 nur mit sechs Adaptern 507 für jeweils zwei Stecker bestückt, wobei die beiden rechten Aufnahmen unbestückt sind. Somit halten die Patchcord-Kabel 605 den Mindestbiegeradius ein, wenn diese durch das Kabelführungselement 606 nach hinten geführt werden. Das Kabelführungselement 606 wird dabei an den Rastnasen 528 befestigt. Wird hingegen das Kabelführungselement 606 an der linken Seite der Term-Spleiß-Kassette 600 befestigt, so bleiben die beiden linken Aufnahmen für die Adapter 507 unbenutzt. In Fig. 8 ist die Term-Spleiß-Kassette 600 in einer Explosionsdarstellung gezeigt.

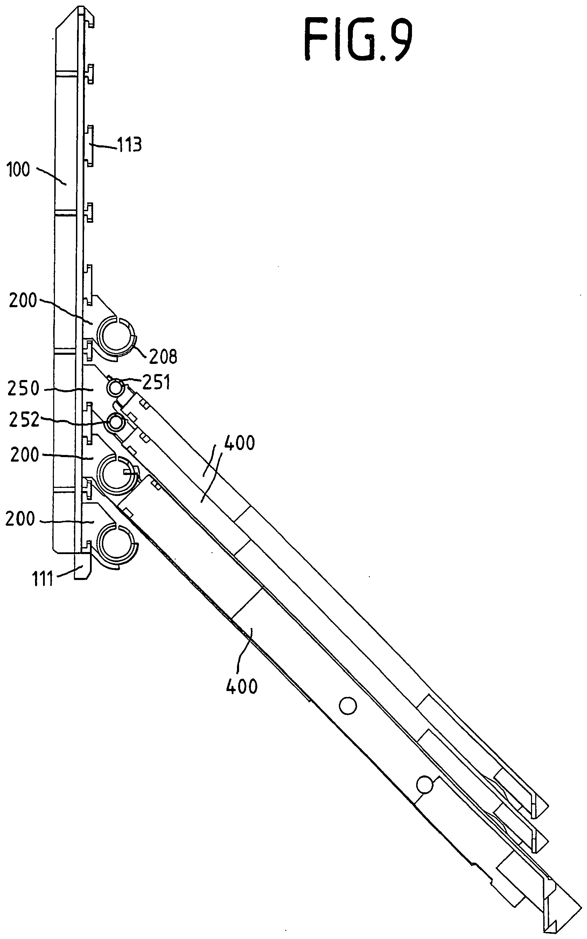

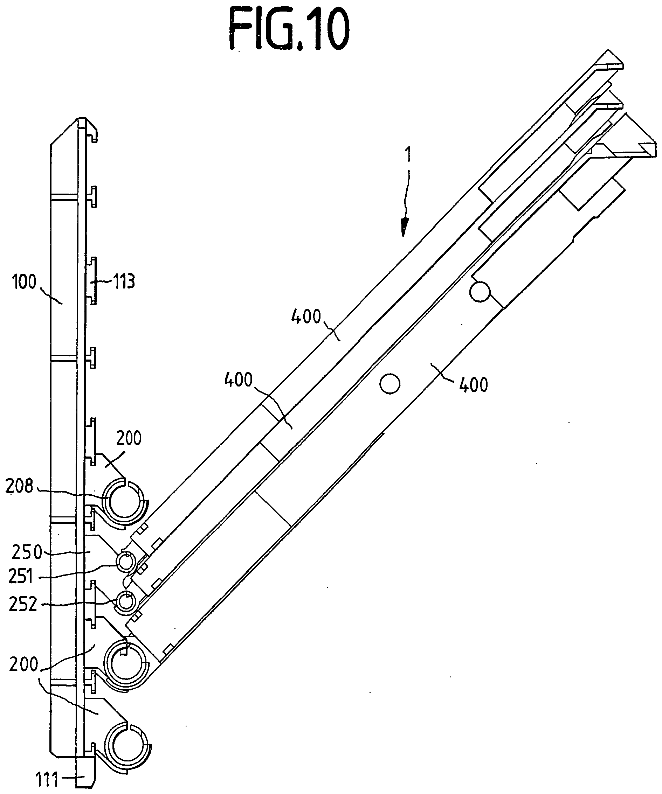

In der Fig. 9 ist Halterung 1 in einer Seitenansicht dargestellt. Dabei sind an dem Achshalter 100 drei Achselemente 200 und ein Achselement 250 angeordnet, wobei das oberste und unterste Achselement nicht mit Kassetten bestückt sind. An dem zweiten Achselement 200 von unten ist eine große Spleiß-Kassette 400 angelenkt, wohingegen an dem Achselement 250 zwei kleine Spleiß-Kassetten 400 angelenkt sind. Die beiden kleinen Spleiß-Kassetten 400 weisen dabei zusammen annähernd die gleiche Bauhöhe wie die eine große Spleiß-Kassette 400 auf. Die Spleiß-Kassetten 400 sind dabei in einer Normalstellung gezeigt, wobei die Spleiß-Kassetten 400 ca. in einem Winkel von 45 Grad gegen den Achshalter 100 angestellt sind. Wird nun der Achshalter 100 in einem Winkel von 45 Grad gegen eine Bodenplatte angestellt, so liegen die Spleiß-Kassetten parallel zur Bodenplatte. In dieser Normalstellung sind die Führungskanäle in den Achselementen 200, 250 offen, so dass relativ einfach Lichtwellenleiter von oben in das oberste Achselement einlegbar bzw. herausnehmbar sind. In der Fig. 10 sind die Spleiß-Kassetten 400 um ca. 90 Grad nach oben geschwenkt, um beispielsweise an eine nicht dargestellte untere Spleiß-Kassette zu gelangen. Bei dieser Schwenkbewegung um die Achselemente 200, 250 wird dann der Führungskanal geschlossen und ein versehentliches Herausrutschen der Lichtwellenleiter in den Achselementen 200, 250 verhindert.

### Bezugszeichenliste

- 1: Halterung
- 100: Achshalter
- 101: Trennrippen
- 101a: Anschlagrippe
- 102: Halteabschnitt
- 103: Oberfläche
- 104: Rastöffnung
- 106: Rastschlitz
- 107: Teil
- 108, 109: Befestigungsrippen
- 110: erster Schenkel
- 111: Rastvorsprung
- 112: abgeschrägtes Teil
- 113: Niederhalter
- 115: Seitenflächen
- 200: Achselemente
- 201: Grundplatte
- 202: Rastelement
- 203: erster Schenkel
- 204: zweiter Schenkel
- 205: Unterschneidung
- 206: Öffnung
- 207: Rastzunge
- 208: erstes Achsteil
- 208a: zweites Achsteil
- 209, 209a: Schlitz
- 210: Längsachse
- 211: Haltestege
- 212, 212a: Führungskanäle
- 213, 213a: Öffnungen
- 214, 214a: Öffnungen
- 215, 215a: Niederhalter
- 250: Achselement
- 251, 251a: Achsteile
- 252, 252a: Achsteile
- 253, 253a: Führungskanäle
- 254, 254a: Führungskanäle
- 255, 256: Längsachse
- 257, 257a: Schlitze
- 258, 258a: Schlitze
- 259, 259a: Niederhalter
- 260, 260a: Niederhalter
- 261, 261a: Haltestege
- 300: Element zur Kabelführung
- 301: erstes Aufsteckelement
- 302: zweites Aufsteckelement
- 303: Rastzunge
- 304: Aufsteckzungen
- 305: erster Schenkel
- 306: zweiter Schenkel
- 307: außen liegende Teile
- 400: Spleiß-Kassette
- 500: Term-Kassette
- 501: Bodenfläche
- 502: linke Seitenwand
- 503: rechte Seitenwand
- 504: obere Stirnwand
- 505: untere Stirnseite
- 506: Halterung
- 507: Adapter
- 508: Einsteckplätze
- 509: Haltesteg
- 511: Eingangsseite
- 512: Ausgangsseite
- 513: Glasfaserstecker
- 514: weiterer Glasfaserstecker
- 515, 515a: Elemente
- 515b: Haltezunge
- 516, 516a: Achskanal
- 517: Längsachse
- 518, 518a: Schlitze
- 519: Kabel
- 520: Einlass-/Auslassabschnitt
- 521: Niederhalter
- 522: Unterschneidung
- 523: Elemente
- 524: Fan-Out-Elemente
- 525: Elemente
- 526: Führungsrippen
- 527: Öffnung
- 528: Rastnasen
- 600: Term-Spleiß-Kassette
- 601: Spleiß-Halter
- 602: Führungsrippen
- 603: Führungskörper
- 604: Rastplatte
- 605: Patchcord-Kabel
- 606: Kabelführungselement
- b1, b2, b3, b4: Abstände
- 700: Kopplungselement
- 701: Rastzunge
- 702: Rastnase

## Patentansprüche

1. Halterung (1) für mindestens eine Kassette (400, 500, 600), wobei die Halterung (1) mindestens einen Achshalter (100), mindestens ein Achselement (200, 250) und mindestens eine Kassette (400, 500, 600) umfasst, wobei die mindestens eine Kassette (400, 500, 600) schwenkbar um eine Schwenkachse an dem Achselement (200, 250) befestigt ist,
wobei das mindestens eine Achselement (200, 250) an dem Achshalter (100) befestigt ist,
wobei das mindestens eine Achselement (200, 250) einen Führungskanal (212, 212a) aufweist, wobei der Führungskanal (212, 212a) zumindest teilweise parallel zur Schwenkachse verläuft,
wobei die Kassette (400, 500, 600) mindestens ein Element (515, 515a) zur drehbaren Lagerung aufweist,
**dadurch gekennzeichnet, dass**
- das zumindest eine Element (515, 515a) zur drehbaren Lagerung ein erstes Element (515) zur drehbaren Lagerung und ein zweites Element (515a) zur drehbaren Lagerung umfasst, die jeweils hohlzylinderförmig ausgebildet sind und jeweils Umfangsprofile mit Schlitzen (518, 518a) in Richtung einer Längserstreckung entlang des Elements (515, 515a) zur Lagerung aufweisen, so dass das erste und das zweite Element (515, 515a) zur drehbaren Lagerung einen ersten und einen zweiten Achskanal (516, 516a) ausbilden, und
- das zumindest eine Achselement (200, 250) ein erstes Achsteil (208) und ein zweiten Achsteil (208a) aufweist, wobei die Achteile (208, 208a) hohlzylinderförmig ausgebildet sind, und jeweils einen Führungskanal (212, 212a) zur Führung von in die Kassette (400, 500, 600) einführbaren Lichtwellenleitern aufweisen, welcher entlang einer gesamten Längserstreckung der Achsteile (208, 208a) und entlang einer zentralen Längsachse (210) parallel zur Schwenkachse verläuft, und
- wobei das Element (515, 515a) zur Lagerung mittels der Schlitze (518, 518a) auf die Umfangsprofile der Achsteile (208, 208a) aufsteckbar oder aufrastbar und somit lösbar mit dem Achselement verbindbar ist, so dass der jeweils in den Achteilen (208, 208a) ausgebildete, hohlzylinderförmige Führungskanal (212, 212a) zur Führung von in die Kassette (400, 500, 600) einführbaren Lichtwellenleitern von der Rotation der Kassette (400, 500, 600) um eine der zentralen Längsachse (210) entsprechende Schwenkachse unabhängig ist.

2. Halterung nach Anspruch 1, **dadurch gekennzeichnet, dass** das mindestens eine Achselement (250) ein erstes Achsteilpaar mit zwei Achsteilen (251, 251a) und ein zweites Achsteilpaar mit zwei Achsteilen (252, 252a) aufweist, wobei die Achsteile (251, 251a, 252, 252a) hohlzylinderförmig ausgebildet sind und jeweils einen Führungskanal (253, 253a, 254, 254a) zur Führung von in die Kassette (400, 500, 600) einführbaren Lichtwellenleitern aufweisen.

3. Halterung nach Anspruch 1 oder 2, **dadurch gekennzeichnet, dass** eine Mantelfläche der Achsteile (208, 208a; 251, 251a, 252, 252a) jeweils einen Schlitz (209, 209a; 257, 257a, 258, 258a) aufweist.

4. Halterung nach Anspruch 3, **dadurch gekennzeichnet, dass** entlang des Schlitzes (209, 209a; 257, 257a, 258, 258a) ein Niederhalter (215, 215a; 259, 259a, 260, 260a) angeordnet ist, der den jeweiligen Schlitz (209, 209a; 257, 257a, 258, 258a) verengt.

5. Halterung nach einem der vorangegangenen Ansprüche, **dadurch gekennzeichnet, dass** die mindestens eine Kassette eine Term-Kassette (500) oder eine Spleiß-Kassette (400) oder eine kombinierte Term-Spleiß-Kassette (600) ist, wobei eine Term-Kassette (500) derart ausgebildet ist, dass einzelne Lichtwellenleiter von einer Außenseite mittels einer Steckverbindung kontaktierbar sind.

6. Halterung nach einem der vorangegangenen Ansprüche, **dadurch gekennzeichnet, dass** das mindestens eine Achselement (200, 250) lösbar an dem mindestens einen Achshalter (100) befestigbar ist.

7. Halterung nach einem der vorangegangenen Ansprüche, **dadurch gekennzeichnet, dass** die kombinierte Term-Spleiß-Kassette (600) eine Term-Kassette (500) und eine Spleiß-Kassette (400) umfasst, wobei die Term-Kassette (500) lösbar mit der Spleiß-Kassette (400) verbunden ist, wobei die kombinierte Term-Spleiß-Kassette (600) mit einem Achselement (250) nach Anspruch 2 verbunden ist.

8. Halterung nach einem der vorangegangenen Ansprüche, **dadurch gekennzeichnet, dass** der mindestens eine Achshalter (100) mindestens ein Befestigungselement aufweist, wobei der mindestens eine Achshalter (100) mittels des mindestens einen Befestigungselements an einem Halteelement oder einem Kopplungselement (700) befestigbar ist.

## Claims

1. A holder (1) for at least one cassette (400, 500, 600), with the holder (1) having at least one shaft holder (100), at least one shaft element (200, 250) and at least one cassette (400, 500, 600), with the at least one cassette (400, 500, 600) being attached to the shaft element (200, 250) such that it can pivot about a pivoting axis,
with the at least one shaft element (200, 250) being attached to the shaft holder (100),
with the at least one shaft element (200, 250) having a guidance channel (212, 212a),
with the guidance channel (212, 212a) running at least partially parallel to the pivoting axis,
with the cassette (400, 500, 600) having at least one element (515, 515a) for rotatable mounting,
**characterized in, that**
the at least one element (515, 515a) for rotatable mounting comprises a first element (515) for rotatable mounting and a second element (515a) for rotatable mounting, each being hollow-cylindrical and having an envelope surface with slots (518, 518a) which extends in the direction of the entire longitudinal extent along the at least one element (515, 515a), so that the first and second element (515, 515a) for rotatable mounting form a first and a second shaft channel (516, 516a), and
the at least one shaft element (200, 250) comprises a first shaft element (208) and a second shaft element (208a), each being hollow-cylindrical and having a guidance channel (212, 212a) for guiding an optical waveguide in the cassette (400, 500, 600), the guidance channels (212, 212a) run along the entire longitudinal extent of the shaft elements (208, 208a) and along the central longitudinal axis (210) parallel to the privoting axis,
the at least one element (515, 515a) for rotatable mounting being pluggable or latchable on the circumferential profile of the shaft elements (208, 208a) by the slots (518, 518a), so that the at least one element (515, 515a) is detachable mounted with the shaft element (200, 250), so that the each hollow cylindrical guidance channel (212, 212a) in the shaft elements (208, 208a) for guiding optical waveguides in the cassette (400, 500, 600) being independent of the rotation of the cassette (400, 500, 600) about a pivot axis corresponding with the central longitudinal axis (210).

2. The holder as claimed in claim 1, wherein the at least one shaft element (250) has a first shaft part pair with two shaft parts (251, 251a) and a second shaft part pair with two shaft parts (252, 252a), the shaft parts (251, 251a, 252, 252a) are hollow cylindrical and have a respective guidance channel (253, 253a, 254, 254a) for guiding an optical waveguide into the cassette (400, 500, 600).

3. The holder as claimed in claim 1 or 2, wherein a circumferential profile of each shaft element (208, 208a, 251, 251a, 252, 252a) has a slot (209, 209a; 257, 257a, 258, 258a).

4. The holder as claimed in claim 3, wherein along the slot (209, 209a; 257, 257a, 258, 258a) a hold-down device (215, 215a; 259, 259a, 260, 260a) is arranged, which creates a constriction in the respective slot (209, 209a; 257, 257a, 258, 258a).

5. The holder as claimed in one of the preceding claims, wherein the at least one cassette is a term cassette (500) or a splice cassette (400) or a combined term-splice cassette (600), wherein a term cassette (500) is configured in such a way that individual optical waveguides from the outsides can be contacted by a plug connection.

6. The holder as claimed in one of the preceding claims, wherein the at least one shaft element (200, 250) can be detachably attached to the at least one shaft holder (100).

7. The holder as claimed in one of the preceding claims, wherein the combined term-splice cassette (600) comprises a term cassette (500) and a splice cassette (400), with the term cassette (500) being detachably connected to the splice cassette (400), wherein the combined term-splice cassette (600) being mounted with a shaft element (250) of claim 2.

8. The holder as claimed in one of the preceding claims, wherein the at least one shaft holder (100) has at least one attachment element, in which case the at least one shaft holder (100) can be attached to a holding element or a coupling element (700) by means of the at least one attachment apparatus.

## Revendications

1. Support (1) pour au moins une cassette (400, 500, 600), le support (1) comprenant au moins un support d'axe (100), au moins un élément d'axe (200, 250) et au moins une cassette (400, 500, 600), l'au moins une cassette (400, 500, 600) étant fixée de manière pivotante autour d'un axe de pivotement sur l'élément d'axe (200, 250),
l'au moins un élément d'axe (200, 250) étant fixé sur le support d'axe (100),
l'au moins un élément d'axe (200, 250) comportant un canal de guidage (212, 212a), le canal de guidage (212, 212a) s'étendant au moins partiellement à la parallèle de l'axe de pivotement,
la cassette (400, 500, 600) comportant au moins un élément (515, 515a) pour le logement rotatif,
**caractérisé en ce que**
- l'au moins un élément (515, 515a) pour le logement rotatif comprend un premier élément (515) pour le logement rotatif et un second élément (515a) pour le logement rotatif qui sont conçus chacun sous la forme d'un cylindre creux et qui comportent chacun des profilés périphériques avec des encoches (518, 518a) en direction d'une extension longitudinale le long de l'élément (515, 515a) pour le logement, de sorte que le premier et le second élément (515, 515a) pour le logement rotatif forment un premier et un second canal axial (516, 516a) et
- l'au moins un élément d'axe (200, 250) comporte une première pièce d'axe (208) et une seconde pièce d'axe (208a), les pièces d'axe (208, 208a) étant conçues sous la forme d'un cylindre creux et comportant chacune un canal de guidage (212, 212a) destiné à guider des fibres optiques insérables dans la cassette (400, 500, 600), lequel s'étend à la parallèle de l'axe de pivotement, le long d'une extension longitudinale totale des pièces d'axe (208, 208a) et le long d'un axe longitudinal central (210), et
- l'élément (515, 515a) pour le logement étant enfichable ou enclenchable à l'aide des encoches (518, 518a) sur les profilés périphériques des pièces d'axe (208, 208a) et donc susceptible d'être assemblé de manière amovible avec l'élément d'axe, de sorte que le canal de guidage (212, 212a) en forme de cylindre creux conçu chaque fois dans les pièces d'axe (208, 208a) pour le guidage de fibres optiques insérables dans la cassette (400, 500, 600) soit indépendant de la rotation de la cassette (400, 500, 600) autour d'un axe de pivotement correspondant à l'axe longitudinal (210) central.

2. Support selon la revendication 1, **caractérisé en ce que** l'au moins un élément d'axe (250) comporte une première paire de pièces d'axe avec deux pièces d'axe (251, 251a) et une deuxième paire de pièces d'axe avec deux pièces d'axe (252, 252a), les pièces d'axe (251, 251a, 252, 252a) étant conçues sous la forme de cylindres creux et comportant chacune un canal de guidage (253, 253a, 254, 254a) pour le guidage de fibres optiques insérables dans la cassette (400, 500, 600).

3. Support selon la revendication 1 ou la revendication 2, **caractérisé en ce qu'**une surface d'enveloppe des pièces d'axe (208, 208a ; 251, 251a, 252, 252a) comporte respectivement une encoche (209, 209a ; 257, 257a, 258, 258a).

4. Support selon la revendication 3, **caractérisé en ce que** le long de l'encoche (209, 209a ; 257, 257a, 258, 258a) est placé un serre-flan (215, 215a ; 259, 259a, 260, 260a) qui rétrécit l'encoche (209, 209a ; 257, 257a, 258, 258a) concernée.

5. Support selon l'une quelconque des revendications précédentes, **caractérisé en ce que** l'au moins une cassette est une cassette de lovage (500) ou une cassette d'épissurage (400) ou une cassette mixte d'épissurage-lovage (600), une cassette de lovage (500) étant conçue de telle sorte que des fibres optiques isolées puissent être mises en contact à partir d'un côté extérieur à l'aide d'un connecteur.

6. Support selon l'une quelconque des revendications précédentes, **caractérisé en ce qu'**au moins un élément d'axe (200, 250) peut se fixer de manière amovible à l'au moins un support d'axe (100).

7. Support selon l'une quelconque des revendications précédentes, **caractérisé en ce que** la cassette mixte de lovage-épissurage (600) comprend une cassette de lovage (500) et une cassette d'épissurage (400), la cassette de lovage (500) étant reliée de manière amovible avec la cassette d'épissurage (400), la cassette mixte de lovage-épissurage (600) étant reliée avec un élément d'axe (250) selon la revendication 2.

8. Support selon l'une quelconque des revendications précédentes, **caractérisé en ce que** l'au moins un support d'axe (100) comporte au moins un élément de fixation, l'au moins un support d'axe (100) pouvant se fixer à l'aide de l'au moins un élément de fixation sur un élément de retenue ou un élément d'accouplement (700).
